# EUROPEAN PATENT APPLICATION

(11) **EP 4 607 540 A2**
(43) Date of publication of application: **27.08.2025**
(21) Application number: 25305105.6
(22) Date of filing: 28.01.2025
(51) Int. Cl.: H01B 7/282

(54) **FORMING A WATER BARRIER LAYER FOR SUBSEA POWER CABLES**

(30) Priority: 19.02.2024 NO 20240152
(71) Applicant: Nexans, 92400 Courbevoie (FR)
(72) Inventor: SANGAR, Robin, 92400 Courbevoie (FR); LARSSEN, Jens Ludvig, 92400 Courbevoie (FR); SCHAWLANN, Sigurd, 92400 Courbevoie (FR); JOHANSON, Audun, 92400 Courbevoie (FR)
(74) Representative: Acapo Onsagers AS

(57) **Abstract**

There is provided a method for forming a subsea cable or a joint for a subsea cable. The method comprises: providing a cable assembly that comprises at least a first conductor and a first insulation system surrounding the first conductor; and forming a water barrier layer surrounding a length of the cable assembly, wherein the water barrier layer comprises at least one coating of a metal material applied using a thermal spraying technique. There is also provided a joint obtainable by the above method and a subsea cable obtainable by the above method.

## Description

### FIELD OF THE INVENTION

The present disclosure relates to a method for forming a subsea cable or a joint for a subsea cable, a joint between a first cable assembly and a second cable assembly, and a subsea cable.

### BACKGROUND

It is important to prevent water ingress into a subsea cable because water can damage the cable, and particularly the insulation system of the cable. To prevent water ingress, a subsea cable may have a water barrier, which may be referred to as a water barrier layer, that surrounds the insulation system and the conductor of the cable. Conventional cables use extruded lead, typically in the form of a lead sheath, as their water barrier. Lead sheaths are used in most subsea cable projects.

Lead has been used for many years in cables, and particularly in subsea cables, because it has characteristics that make it suitable for use as a water barrier for a subsea cable. For example, it has a relatively low melting point, is a soft metal, and has high malleability. Because it has been used for such a long time, many of the processes for working with lead have not changed for many years.

An example of such a process is the use of "lead wiping" when jointing two cables together. Lead wiping involves a technician melting lead and solder and then wiping the mix onto a joint using their hands. Such a process can be wasteful and slow, especially if the cable engineer is inexperienced, and, despite protective clothing and equipment being used, can be dangerous for the cable engineer.

Accordingly, it is desirable to identify new ways of forming water barrier layers for subsea cables. As the industry seeks to move away from the uses of lead due to its environmental impacts, it is also desirable to identify ways of forming water barrier layers for subsea cables that can use alternative materials.

### SUMMARY OF THE INVENTION

The present invention is defined by the appended claims and in the following:
In a first aspect, there is provided a method for forming a subsea cable or a joint for a subsea cable, the method comprising: providing a cable assembly that comprises at least a first conductor and a first insulation system surrounding the first conductor; and forming a water barrier layer that surrounds a length of the cable assembly, wherein the water barrier layer comprises at least one coating of a metal material applied using a thermal spraying technique.

Thermal spraying techniques provides a more time- and resource-efficient way of forming a water barrier layer for subsea cables. Thermal spraying can be used to provide coatings that are relatively thin. Such coatings may be thinner than when the traditional lead wiping method is used, where a joint is formed, or thinner than lead extrusion along a cable when forming cables. Thermal spraying techniques also lend themselves well to repairing cables, because they are efficient and coatings can be applied more precisely than using traditional techniques. A thinner coating having the same water-tightness is beneficial because it reduces the weight and bulk of a cable or a cable join. The traditional methods used for jointing, repair, or cable formation have been unchanged for over a century, and there has been a need for new methods.

A further benefit is that thermal spraying techniques can be used to form water barriers for subsea cables using different materials to lead.

Moreover, thermal spraying techniques can be applied in a factory setting or in a remote setting, and can be used on both existing and new cables. Accordingly, the possibilities for cable preparation and repair are improved.

The method may be a method for forming a joint for a subsea cable. Forming a joint may be referred to as joining or jointing. A joint may be formed between two or more cable assemblies, which are joined together to form the subsea cable. Two cable assemblies may be joined to form a longer subsea cable. More than two cable assemblies may be joined or spliced together to form a branched subsea cable.

The method may be a method for forming a subsea cable by repair. This may be referred to as repairing the subsea cable or reinstating the subsea cable. For example, a water barrier layer of a subsea cable may be damaged in use, and the method may be a method for repairing the water barrier layer. A damaged portion of the subsea cable may be repaired. The method may be a method for forming a new subsea cable.

The subsea cable may be a subsea power cable, such as a subsea high-voltage power cable. The subsea cable may be a single-conductor cable, having a single insulation system and a single conductor. This may be referred to as a single-core cable. The single-conductor cable may be a DC power cable. A cable core, or more simply a core, may have an insulation system and a conductor. Alternatively, the subsea cable may be a three-conductor cable, which may include three conductors with respective insulation systems and a further system that encompasses those conductors and insulation systems. This may be referred to as a three-core, or triple-conductor cable. **In** such a cable, the first conductor may be one of three conductors. The three-conductor cable may be an AC power cable.

The first cable conductor may comprise a copper or aluminium conductor formed from a plurality of filaments or strands. The first insulation system may comprise one or more layers of insulation, which may be formed from a polymer material. The first insulation system may comprise a screen or semiconductor between the one or more layers of insulation and the first cable conductor. The screen may be referred to as the inner screen, inner semiconductor, or inner semiconductor layer. The first insulation system may comprise a further screen surrounding the one or more layers of insulation. The further screen may be referred to as an outer screen, outer semiconductor, or outer semiconductive layer. The first insulation system may comprise a waterblock layer surrounding the further screen. The coating may be applied to the waterblock layer, the further screen, an insulation layer, or another layer surrounding the waterblock layer. The first insulation system may encompass or surround the first conductor along its full length.

As used herein, the term "water barrier layer" refers to a screen layer that provides watertightness around an insulation system of a subsea cable.

The water barrier layer is formed to surround a length of the cable assembly. The length may be a portion of the cable assembly or the full length of the cable assembly. The length may comprise a first region of the cable assembly that previously lacked a water barrier layer, such as a region of the cable in which a defect in the water barrier layer is found or a region that forms part of a joint between the cable assembly and another cable assembly. The length may also comprise a second region of the cable assembly that previously included a water barrier layer. The second region may comprise a predetermined amount of the cable assembly. The predetermined amount may be a percentage amount of the full length of the cable assembly, and may comprise 0.1% of the full length of the cable assembly, may comprise 0.5% of the full length of the cable assembly, or may 1% of the full length of the cable assembly. The predetermined amount may be a measurement, and the measurement may comprise 1 cm of the cable assembly, 5 cm of the cable assembly, 10 cm of the cable assembly, 20 cm of the cable assembly, 50 cm of the cable assembly, or 1 m of the cable assembly. The skilled person would be able to determine the dimensions of the length, and said first and second regions, over which the water barrier layer is to be formed.

The at least one coating may comprise a single coating, such as a coating along the full length of the cable assembly. The coating may comprise a plurality of coatings. Coatings may be applied at discrete positions along the cable assembly, or may be layered. The coating may be surrounding the circumference of the cable assembly, or may be surround only a part of the cable assembly. The coating may comprise a thin layer. The layer may be a few millimetres thick. For example, the layer may have a thickness between 1 mm and 10 mm thick. Different coatings may be applied formed of different metal materials. The water barrier layer may consist of the metal material or of the coating.

Although a coating formed of a metal material is referred to above, in examples the coating may be formed of a polymer or composite material applied by thermal spraying to form the water barrier.

The water barrier layer may be referred to as the water barrier or as a waterproof or waterproofing layer. The water barrier layer may prevent water ingress to the insulation layer and conductor of the cable assembly. Forming the water barrier layer may comprise forming a new water barrier layer that surrounds part of a cable assembly, completing a water barrier layer by connecting two existing water barrier layers, or reinstating a water barrier layer by repairing an existing water barrier.

The method may comprise testing the coating or testing the water barrier layer after applying the coating. Testing may also be referred to as inspection. The testing may be to determine a thickness of the water barrier layer, to determine watertightness of the water barrier layer, or to identify areas of reduced thickness. Where the cable assembly already has a water barrier layer or a partial water barrier layer, testing may be performed prior to applying the coating to identify where repairs may be required. Testing may include using eddy current testing, ultrasound testing, gamma ray spectroscopy, or shearography. Testing may include sample testing.

The cable assembly may be a first cable assembly and the method may comprise: providing a second cable assembly that comprises a second conductor and a second insulation system surrounding the second conductor; forming an electrical connection between the first conductor and the second conductor; and forming the water barrier layer to surround the electrical connection and a length of the second cable assembly.

Forming a water barrier layer to surround a length of a first cable assembly, an electrical connection, and a length of a second cable assembly, may provide protection for the electrical connection between the two cable assemblies. Accordingly, a water barrier can be provided for two cable assemblies being joined quickly and efficiently.

The electrical connection between the first conductor and the second conductor may be formed by directly joining the first conductor to the second conductor. The electrical connection may be formed using an intermediate conductor.

The method may comprise stripping back one or more layers of the first cable assembly and one or more layers of the second cable assembly to expose the first conductor and the second conductor for joining.

The method may comprise forming one or more intermediate layers over the electrical connection and any exposed portions of the first conductor and the second conductor. The water barrier layer may be formed to surround said one or more intermediate layers.

The lengths of the first cable assembly and the second cable assembly over which the water barrier layer is formed may comprise part of the first and second insulation systems. In other words, the water barrier layer may be formed over the electrical connection and may extend over a part of the insulation for each assembly. The lengths may be the same or may differ.

The first cable assembly may comprise a first water barrier layer surrounding the first insulation system and the second cable assembly comprises a second water barrier layer surrounding the second insulation system. Forming the water barrier layer may comprise forming a joint between the first cable assembly and the second cable assembly, wherein the joint comprises the coating and connects the first water barrier layer and the second water barrier layer.

Forming a joint may be referred to as jointing. Jointing two or more cable assemblies in this manner may provide a longer cable that has a continuous water barrier encompassing the electrical connection. Accordingly, water ingress around the area in which the assemblies are joined may be prevented, and the cable can continue to be used subsea.

The joint forms part of the water barrier layer, together with the first water barrier layer and the second water barrier layer to which the joint is connected. Therefore, the connections between the joint and the first water barrier layer and between the joint and the second water barrier layer are watertight, so that a water barrier layer is created along the length of the cable.

The joint may mechanically connect the first cable assembly and the second cable assembly. The joint may comprise a third water barrier layer that connects the first water barrier layer and the second water barrier layer.

The first water barrier layer may be formed of the metal material. Alternatively, the first water barrier layer may be formed of a different metal material to the metal material of the coating. The second water barrier layer may be formed of a different metal material to the metal material of the coating.

The joint may comprise a joint element. Forming the joint may comprise: positioning the joint element to surround a further length of the first conductor and a further length of the second conductor; applying a first coating of the metal material using the thermal spraying technique to join the joint element to the first water barrier layer; and/or applying a second coating of the metal material using the thermal spraying technique to join the joint element to the second water barrier layer. The joint element may surround a length of the first insulation system and a length of the second insulation system. The further lengths may be referred to as second lengths to differentiate from the lengths over which the water barrier layer is formed, which may be referred to as the first lengths. The further length may be the same for the first conductor and the second conductor, or may be different between the first conductor and the second conductor. The further lengths may include a first region where no water barrier layer exists and a second region comprising part of a water barrier layer of the first cable assembly or the second cable assembly. The second region may comprise a predetermined amount of the water barrier layer, which may comprise a percentage amount or a measurement. The skilled person would be able to determine the dimensions of such first and second regions. The first conductor and first insulation system may be referred to as a first cable core and the second conductor and second insulation system may be referred to as a second cable core, and accordingly the joint element may be positioned to surround a length of the first cable core and a length of the second cable core.

The joint element may comprise a prefabricated piece that is rolled or laid over the place where the cable assemblies are to be joined, so that the joint is covered. The joint element may be or may comprise a sheath, a tape, or a sheet. The joint element may be formed, wholly or partially, of the metal material or may be formed of a different metal material. The joint element may comprise a tube with a diameter that is greater than a diameter of the first cable assembly and the second cable assembly. The method may comprise working or forming the joint element so that at least a portion of the joint element conforms to or is adjacent to the first water barrier layer or the second barrier layer. This may comprise rolling the joint element down so that its ends have diameters that are substantially similar to those of the cable assemblies.

Using thermal spraying with a joint element, particularly a sheath, can reduce the amount that the joint element has to be rolled down during forming. Traditional techniques such as lead wiping require the joint element and a metal water barrier layer to be very close together, whereas joining can be performed using thermal spraying for metals that are further apart.

The joint may consist of the coating. Thermal spraying techniques alone may be used to form the joint that connects the first water barrier layer to the second water barrier layer. Where the joint comprises a third water barrier layer that connects the first water barrier layer and the second water barrier layer, the third water barrier layer may consist of the coating.

A joint may be formed from a coating applied using a thermal spray technique more quickly than conventional techniques. The resulting joint may have a smaller maximum diameter than conventional joints.

The cable assembly may comprise a first water barrier layer surrounding the first insulation system. Forming the water barrier layer may comprise repairing the first water barrier layer using the coating.

Thermal spraying can be used to repair or reinstate a water barrier layer more quickly and efficiently. Subsea cables, particularly power cables, can be crucial infrastructure so reducing the amount of time for which the cable cannot be used is important. Because thermal spraying can apply a metal coating quickly and in a targeted manner, the cable can be returned to operational use more quickly than would be possible with traditional techniques.

The water barrier layer may be formed to surround the first insulation system along its full length. The term "full length" may indicate that the water barrier layer and the first insulation system have substantially the same length. This is in contrast to "a length" used above, which may refer to a part of the full length or the full length.

The water barrier layer may be formed as a new water barrier layer for a cable assembly. The water barrier layer may therefore be formed substantially from the coating and by means of thermal spraying. The method may also comprise hanging or otherwise mounting the cable assembly for spraying and moving the cable assembly relative to a thermal spray gun while applying the coating. For example, the thermal spray gun may be stationary and the cable assembly may be spooled through an area in which the thermal spray gun is spraying. Alternatively, the thermal spray gun may be moved along while the cable is kept stationary.

Forming the water barrier layer by thermal spraying may be faster than traditional methods of forming a water barrier layer and may produce a thinner, and therefore lighter, water barrier layer.

The method may comprise applying a protective layer surrounding at least part of the first insulation system, wherein the coating is applied to the protective layer. The protective layer may protect the insulation system from exposure to excessive heat from the metal material as it is being thermally sprayed. The protective layer may also provide a surface for the coating to be applied to and to bond with.

The protective layer may comprise a foil, tape, film, or sheet. The protective layer may comprise a metal. The protective layer may be formed from metal, such as a metal foil. The metal foil may be an aluminium foil. The protective layer may comprise a polymer. In an example, the protective layer may comprise a polymer foil having a metallic surface. The protective layer may be applied to the cable assembly so that its metallic surface faces radially outwardly. The coating may be applied to the metallic surface.

A joint may be formed over the protective layer. A new water barrier layer may be formed over the protective layer. A repair may be performed by placing the protective layer on to the cable assembly.

The method may comprise, prior to forming the water barrier layer, cleaning a surface of the first cable assembly to which the coating is to be applied. Cleaning the surface may use a plasma cleaning technique, preferably atmospheric plasma cleaning.

The surface may be a surface of the insulation system. The surface may be a surface of a protective layer. The surface may be a metal surface or a plastic surface. Cleaning may ensure that the thermal spraying is effective, and that the coating is able to form around the cable assembly suitably and without flaws.

The thermal spraying technique may comprise one of: flame spraying; arc spraying; plasma spraying; high velocity oxygen fuel spraying; or detonation gun spraying.

Different uses of thermal spraying techniques may be suitable for different uses. For example, high velocity oxygen fuel spraying may be preferrable for use in a factory and for use in creating new water barrier layers for cable assemblies because it creates uniform coatings. Plasma or arc spraying may be preferred for use in the field or when preparing joints or repairs due to their ease of use and precision.

The metal material may comprise one of: a copper material; a copper nickel alloy material; a titanium material; or a lead material. Where the coating is applied to an existing water barrier layer, the metal material may be a different metal material to a metal material forming the existing water barrier layer. For example, cable may comprise an existing water barrier layer formed from lead, and a copper-nickel alloy coating may be applied to form a joint.

Although metals other than lead have traditionally not been used to form water barriers due to their weight, higher melting points, and lower flexibility, thermal spraying enables thinner coatings to be applied that still provide sufficient waterproofing and to apply metal coatings at higher temperatures. Accordingly, such metals may now be used.

According to a second aspect, there is provided a joint between a first cable assembly and a second cable assembly obtainable according to a method as described above. According to a third aspect, there is provided a subsea cable obtainable according to a method as described above.

Joints and subsea cables obtained according to the method may have different properties to other joints and subsea cables. For example, the joint or subsea cable may have a smaller diameter or occupy less volume, may have less mass, or may be more flexible. This may be because a thinner water barrier layer is achievable using thermal spraying and because different types of joints are achievable. Different materials may be used to form the water barrier layer, which may provide different properties to the joint or subsea cable.

### BRIEF DESCRIPTION OF THE DRAWINGS

In the following description this invention will be further explained by way of exemplary embodiments shown in the drawings:
Fig. 1 is a schematic diagram of a cross-section of a single-conductor subsea power cable;
Fig. 2 is a schematic diagram of a cross-section of a three-conductor subsea power cable;
Fig. 3 is a flow chart of a process for forming a subsea power cable;
Figs. 4A to 4D are schematic diagrams illustrating a process for joining two subsea power cables;
Figs. 5A to 5C are schematic diagrams illustrating an alternative process for joining two subsea power cables;
Figs. 6A and 6B are schematic diagrams illustrating a process for repairing an existing subsea power cable; and
Figs. 7A and 7B are schematic diagrams illustrating a process for preparing a new subsea power cables.

### DETAILED DESCRIPTION

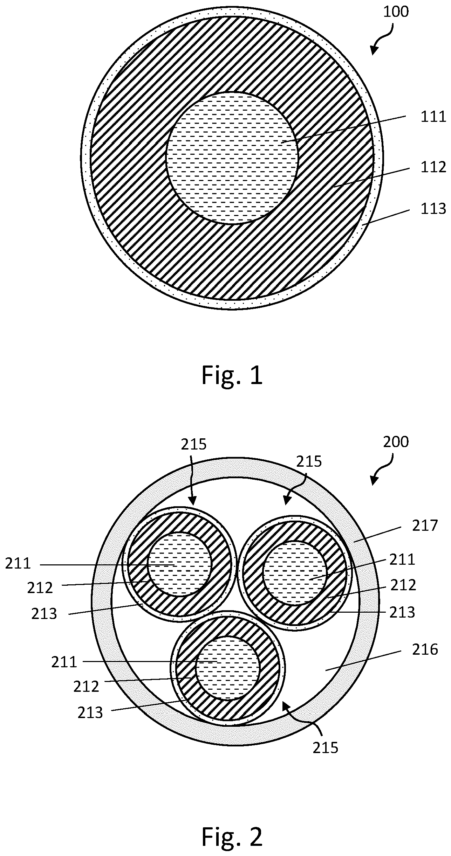

Fig. 1 shows a cross section of a first cable 100. The first cable 100 is a subsea power cable. The first cable 100 has a cable core comprising a cable conductor 111, made of a highly conductive material such as copper, and an insulation system 112. The first cable 100 is a single conductor cable, meaning it only has one conductor. The insulation system 112 comprises one or more layers that circumferentially surround the cable core 111. The first cable 100 comprises a water barrier layer 113. The insulation system 112 is circumferentially surrounded by the water barrier layer 113. The water barrier layer 113 is formed of a metal material. The metal material is typically lead, although other metals may be used. The water barrier layer 113 is configured to prevent water ingress into the cable core, which may cause damage to the insulation system 112.

Fig 2 shows a cross section of a second cable 200. The second cable 200 is a subsea power cable having three cable cores 215. The cable cores 215 each have a conductor 211 of a high conductive material, such as copper. The conductors 211 are surrounded by respective insulation systems 212. The respective insulation systems 212 are surrounded by respective water barrier layers 213. The three cable cores 215 are embedded in a filling material 214, which may be a filling compound. A sheath 217 formed of a polymer circumferentially surrounds the filling material 216.

The structures of the cables 100, 200 are exemplary structures for the purpose of explanation. These cables 100, 200 may include other known elements. For example these cables may comprise an armouring layer, one or more bend restrictors or bend stiffeners, or, in the case of a three-core cable, such as cable 200, a water barrier layer that surrounds the complete structure in addition to the water barrier layers of the cable cores. The techniques described herein may also be used with other cable structures that include a water barrier layer. These cable structures may have any combination of the elements described in relation to the above cables 100, 200 as well as any other known elements.

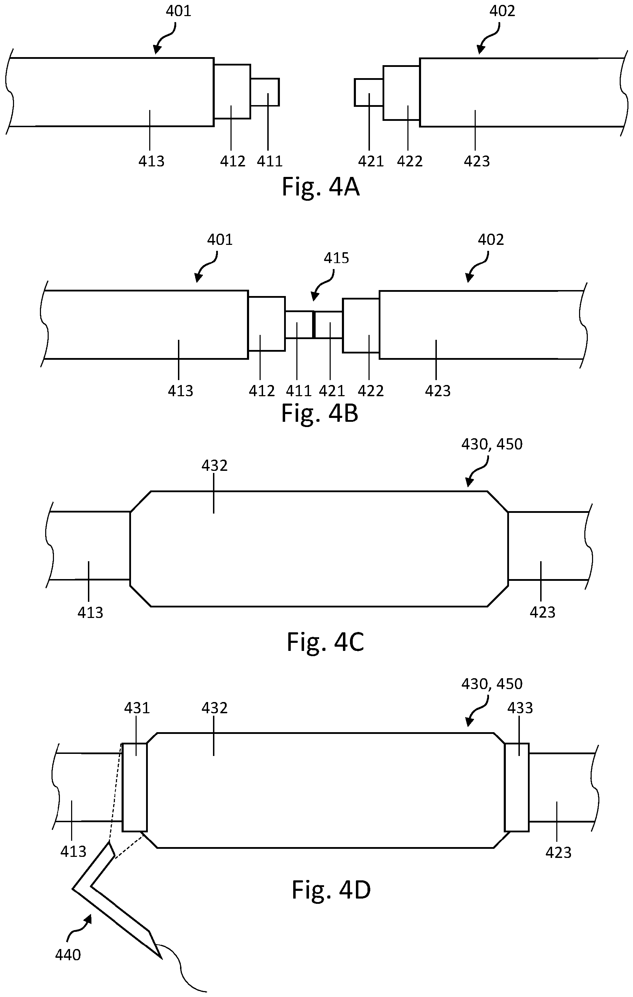

The cables 100, 200 of Fig. 1 and Fig. 2 have water barrier layers 113, 213. These water barrier layers 113, 213 and the water barrier layers of any other cable structures may be formed using the techniques described herein. For ease of explanation, Figs. 4A to 7B show cable assemblies having a single conductor, and therefore having a structure similar to the cable 100 of Fig. 1.

Cables such as the cables 100, 200 shown in Figs. 1 and 2 may be formed from a single cable assembly, or more than one cable assembly joined together. A cable assembly comprises at least a cable core, including a conductor and an insulation system. A water barrier layer may be formed to surround the cable core to form the subsea cable from the cable assembly. Forming the water barrier layer may include creating an entirely new water barrier layer, reinstating or repairing an existing water barrier layer of the cable assembly, or joining two cable assemblies together.

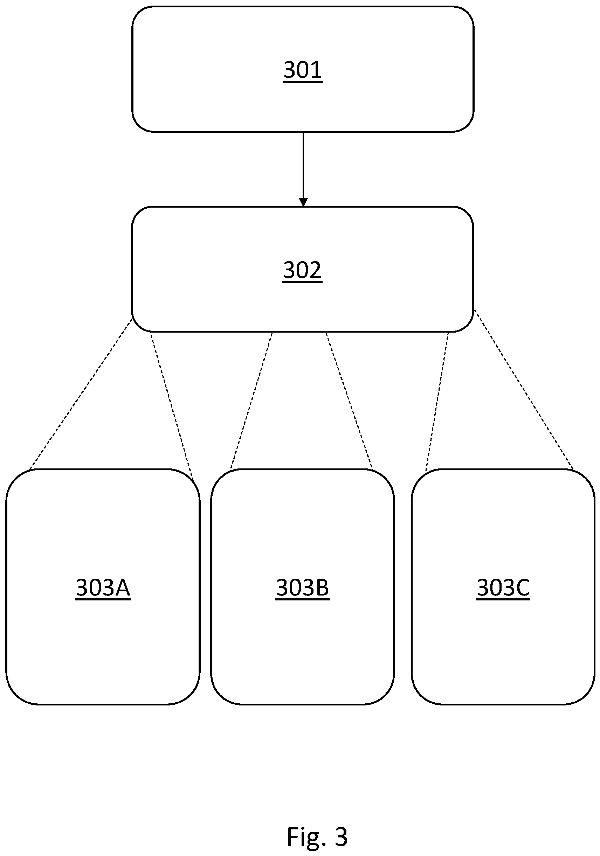

Fig. 3 shows a flow chart of a method 300 for forming a subsea cable or for forming a joint between two cable assemblies. The method 300 includes the steps of providing 301 at least one cable assembly comprising a conductor and an insulation system. The method 300 also includes forming 302 a water barrier layer for the cable assembly using thermal spraying.

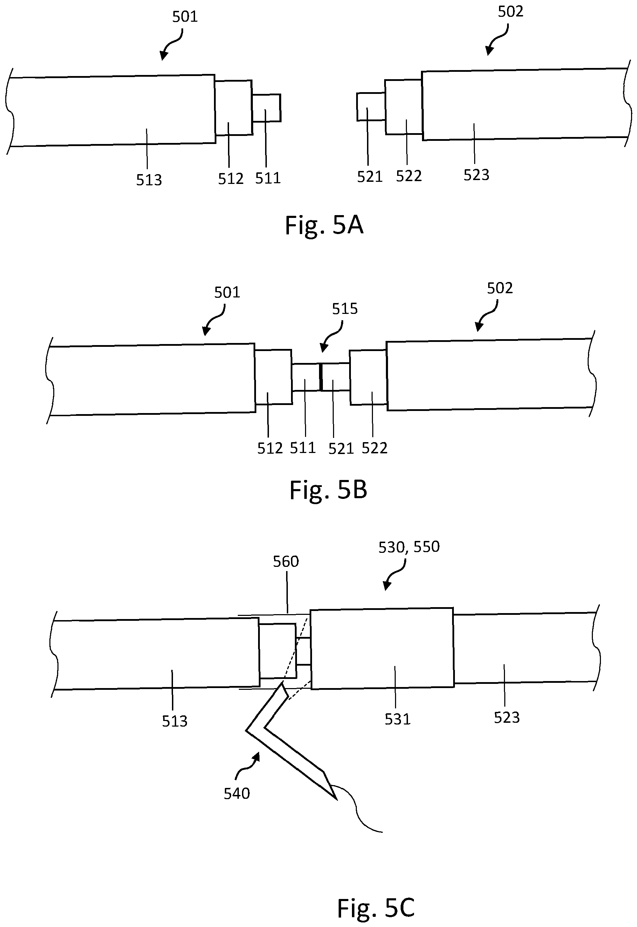

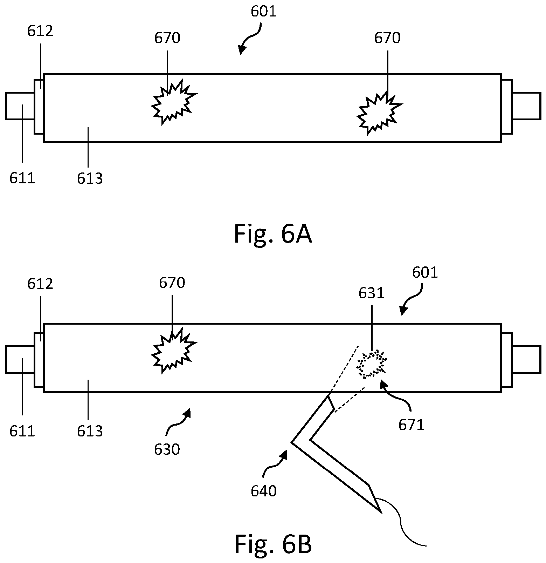

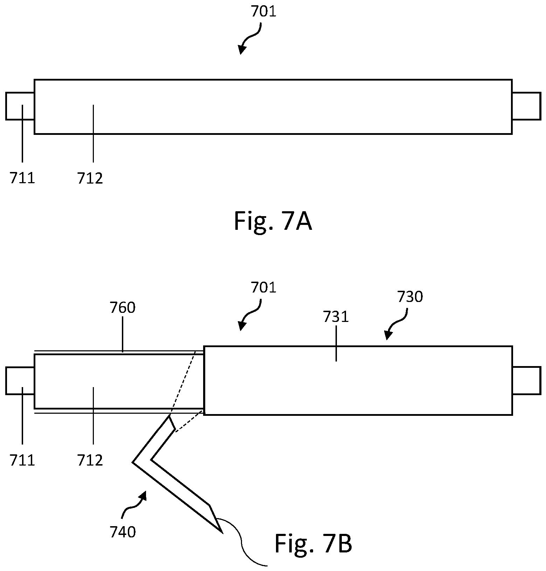

Fig. 3 indicates three ways 303A-C in which the water barrier layer can be formed. A first way 303A, which is explained in more detail below in relation to Figs. 4A to 4D and Figs. 5A to 5C, is that the water barrier layer may be formed as part of a joint between two cable assemblies. Each cable assembly may have an existing water barrier layer, and a join may be formed between the two existing water barrier layers, thereby forming a longer, comprehensive water barrier layer across both cable assemblies. In a second way 303B, described below in more detail in relation to Figs. 6A and 6B, the water barrier layer can be formed by reinstating an existing water barrier layer. An existing water barrier layer of the cable assembly may be damaged, and repairing the damage using the thermal spraying technique may result in the water barrier layer being reinstated, and therefore formed. A third way 303C, which is described below in more detail in relation to Figs. 7A and 7B, is that part or all of a new water barrier for a cable assembly may be formed using the method 300.

Turning to Figs. 4A to 4D, a process for forming a joint between two cable assemblies is shown. As shown in Fig. 4A, a first cable assembly 401 and a second cable assembly 402 are provided. The first cable assembly 401 includes a first conductor 411, a first insulation system 412 surrounding the first conductor 411, and a first water barrier layer 413 surrounding the first insulation system 412. The first water barrier layer 413 has been stripped back to reveal a portion of the first insulation system 412 and the first insulation system 412 has been stripped back to reveal a portion of the first conductor 411. The second cable assembly 402 includes a second conductor 421, a second insulation system 422 surrounding the second conductor 421, and a second water barrier layer 423 surrounding the second insulation system 422. The second water barrier layer 423 has been stripped back to reveal a portion of the second insulation system 422 and the second insulation system 422 has been stripped back to reveal a portion of the second conductor 421.

As shown in Fig. 4B, an electrical connection 415 is formed between the first cable assembly 401 and the second cable assembly 402, specifically between first conductor 411 and the second conductor 421. To achieve the electrical connection 415, the first cable assembly 401 and the second cable assembly 402 are brought close to one another so that the first conductor 411 and the second conductor 421 are close to one another or are in contact. An electrical connection 415 is then formed, which may be achieved by applying a conductor between the first conductor 411 and the second conductor 421 or by physically connecting the two conductors 411, 421.

Fig. 4C and Fig. 4D show a joint 450 being formed between the first cable assembly 401 and the second cable assembly 402. As shown in Fig. 4C, a joint element 432 is provided. The joint element 432 is positioned over a portion of the first conductor 411 and a portion of the second conductor 421. The joint element 432 extends across the joint formed between the first conductor 411 and the second conductor 421. The joint element 432 in this example is a metal sheath that has been shaped to conform to the first cable assembly 401 and second cable assembly 402 by rolling down its ends to have an angled profile. The joint element 432 may be a tape, sheet, or foil formed of metal in other examples. The joint element 432 extends to cover the exposed joint between the conductors 411, 421 and the exposed portions of the insulation systems 412, 422. The joint element 432 also extends to cover part of the first and second water barrier layers 413, 423.

In Fig. 4D, the joint element 432 is joined to the first cable assembly 401 and second cable assembly 402 to form the joint 450 and to form a full water barrier layer 430 between the cable assemblies 401, 402 and across the joint 450.

The joining is achieved by applying coatings of a metal material that join the joint element 432 to the first water barrier layer 413 and the second water barrier layer 423 respectively. A first coating 431 is applied to join the joint element 432 to the first water barrier layer 413. A second coating 433 is applied to join the joint element 432 to the second water barrier layer 423. The coatings 431, 433 are applied using a thermal spray technique 440. The coatings 431, 433 form a watertight connection between the joint element 432 and the water barrier layers 413, 423, thereby forming the full water barrier layer 430. The full water barrier layer 430 therefore includes the first water barrier layer 413, the first coating 431, the joint element 432, the second coating 433 and the second water barrier layer 423.

The coatings 431, 433 are formed by thermally spraying a metal material. The metal material may be the same metal material as the joint element 432 is formed from, and may be the same metal material that the first water barrier layer 413 and the second water barrier layer 423 are formed of.

Although not shown in Figs. 4A to 4D, the process may also involve forming an insulation system between the first cable assembly 401 and the second cable assembly 402. Forming the insulation system may comprise reinstating an insulation system by connecting the first insulation system 412 to the second insulation system 422 with an intermediate insulation system.

Figs. 5A to 5C show a different way of forming a joint using a thermal spraying technique. In Fig. 5A, a first cable assembly 501 and a second cable assembly 502 are provided. The first cable assembly 501 and the second cable assembly 502 have similar structures to the cable assemblies 401, 402 of Figs. 4A to 4D, and include respective conductors 511, 521, insulation systems 512, 522, and water barrier layers 513, 523. The insulation systems 512, 522 surround their respective conductors 511, 521 and have been stripped back to reveal parts of the conductors 511, 521, while the water barrier layers 513, 523 surround the insulation systems 512, 522 and are stripped back to reveal parts of the insulation systems 512, 522.

In this way of joining the cables, as shown in Fig. 5B, an electrical connection 515 is formed between the first cable assembly 501 and the second cable assembly 502. This may be performed in the same way as the electrical connection 415 was formed between the cable assemblies 401 and 402 in relation to Fig. 4B.

Next, as shown in Fig. 5C, a joint 550 is formed. The joint 550 is formed by applying a coating 531 across the electrical connection 515 to connect the first water barrier 513 with the second water barrier 523, to form a full water barrier 530. The coating 531 is applied using a thermal spraying technique 540. In the example shown, a protective layer 560 is provided around the first and second cable assemblies 501, 502 that surrounds the area on which the coating 531 is being applied. The protective layer 560 may comprise a metallic foil. The protective layer 560 may provide a surface for the coating 531 to bond or adhere to and/or may provide protection to the electrical connection 515 and the insulation layers 512, 522. The coating 531 may be applied over the protective layer 560 and so that it extends beyond the protective layer 560 and comes into contact with the water barrier layers 513, 523, so that a full, watertight water barrier layer 530 can be formed. In this case, therefore, the joint 550 may be said to consist of the coating 531 because the full water barrier layer 530 is formed between the water barrier layers 513, 523 using only the coating 531. The protective layer 560 is considered to be separate to the coating 531 and the joint 550.

Figs. 6A and 6B show how a cable assembly 601 can be repaired using thermal spraying. In Fig. 6A, a cable assembly 601 is shown. The cable assembly 601, as with the cable assemblies 401, 402, 501, 502 of earlier Figs. has a single-conductor structure that is visible in Figs. 6A and 6B. The cable assembly 601 has a conductor 611, an insulation system 612 that surrounds the conductor 611, and a water barrier layer 613 that surrounds the insulation system 612.

The water barrier layer 613 has been damaged in use, in handling, or in transit, and two areas of damage 670 are depicted in Fig. 6A. In this example, the damage 670 is to the water barrier layer 613 only, and the insulation system 612 and conductor 611 are intact.

Fig. 6B illustrates reinstating a full water barrier layer 630 by repairing the damage 670. To reinstate the water barrier 630, a coating 631 is applied to each area of damage to form a repaired portion 671. The coating 631 is applied by a thermal spraying technique 640.

In some examples, the insulation system of a cable may be damaged. It may be useful in such situations to cut the cable into two cable assemblies, remove the damaged parts, and to then use a technique for joining the cable assemblies as described above in relation to Figs. 4A to 4D or Figs. 5A to 5C to provide a repair and to reinstate the water barrier layer. Although not detailed here, in some examples the method may include removing a portion of the water barrier layer around the damaged area and repairing the layers underneath, using a conventional method.

Figs. 7A and 7B show how a new water barrier layer 730 can be formed for a cable assembly 701. The cable assembly 701 is provided in Fig. 7A and comprises a conductor 711 and an insulation system 712. In Fig. 7A the cable assembly 701 lacks a water barrier layer.

Fig. 7B shows a water barrier layer 730 being applied using a thermal spraying technique 740. The water barrier layer 730 comprises a coating 731 formed by the thermal spraying. The coating 731 is being applied over a protective layer 760 that surrounds the insulation system 712. The water barrier layer 730 therefore surrounds the insulation system 712 and the protective layer 760.

Each of the thermal spraying techniques 440, 540, 640, 740 shown in the figs. above illustrate a spray gun connected to a reservoir of feedstock that is used to form the coatings. The feedstock may be solid and may be liquefied by the spray gun or other equipment as it is supplied to the spray gun. A spray gun may be used and may be handled by a technician who directs a spray of liquid onto the cable assembly to form the coating. The technician may vary the parameters of the spray to suit the purpose. The cable assembly may be moved relative to the gun or the gun may be moved relative to the cable assembly, depending on the application. Although metals are referred to above, the feedstock may be a polymer or composite material. The coatings applied by thermal spraying may comprise or may be formed from a polymer or composite material.

In each of the techniques described above, the surface to which the coating is being applied may be cleaned prior to applying the coating or initiating thermal spraying. The cleaning may be a form of plasma cleaning, preferably atmospheric plasma cleaning.

## Claims

1. A method (300) for forming a subsea cable (100; 200) or a joint for a subsea cable (100; 200), the method (300) comprising:
providing (301) a cable assembly (401; 501; 601; 701) that comprises at least a first conductor (411; 511; 611; 701) and a first insulation system (412; 512; 612; 712) surrounding the first conductor (411; 511; 611; 711); and
forming (302) a water barrier layer (430; 530; 630; 730) that surrounds a length of the cable assembly (401; 501; 601), wherein the water barrier layer (430; 530; 630; 730) comprises at least one coating (431; 531; 631; 731) of a metal material applied using a thermal spraying technique (440; 540; 640; 740).

2. The method (300) of claim 1, wherein the cable assembly (401; 501; 601; 701) is a first cable assembly (401; 501) and wherein the method comprises:
providing a second cable assembly (402; 502) that comprises a second conductor (421; 521) and a second insulation system (422; 522) surrounding the second conductor (421; 521);
forming an electrical connection (415; 515) between the first conductor (411) and the second conductor (421); and
forming (302) the water barrier layer (430; 530; 630; 730) to surround the electrical connection (415; 515) and a length of the second cable assembly.

3. The method (300) of claim 2, wherein the first cable assembly (401) comprises a first water barrier layer (413) surrounding the first insulation system (412) and the second cable assembly (402) comprises a second water barrier layer (423) surrounding the second insulation system (422), and wherein forming the water barrier layer (430; 530) comprises:
forming a joint (450; 550) between the first cable assembly (401; 501) and the second cable assembly (402; 502), wherein the joint (450; 550) comprises the coating (431; 531) and connects the first water barrier layer (413) and the second water barrier layer (423).

4. The method (300) of claim 3, wherein the joint (450; 550) comprises a joint element (432), and wherein forming the joint (450; 550) comprises:
positioning the joint element (432) to surround a further length of the first conductor (411) and a further length of the second conductor (421);
applying a first coating (431) of the metal material using the thermal spraying technique to join the joint element (432) to the first water barrier layer (413); and
applying a second coating (433) of the metal material using the thermal spraying technique to join the joint element (432) to the second water barrier layer (423).

5. The method (300) of claim 3, wherein the joint (550) consists of the coating (531).

6. The method (300) of claim 1, wherein the cable assembly (601) comprises a first water barrier layer (613) surrounding the first insulation system (612) and wherein forming the water barrier layer (630) comprises repairing the first water barrier layer (613) using the coating (631).

7. The method (300) of claim 1, wherein the water barrier layer (730) is formed to surround the first insulation system (712) along its full length.

8. The method (300) of any preceding claim, comprising:
applying a protective layer (560; 760) surrounding at least part of the first insulation system (512; 712), wherein the coating (531; 731) is applied to the protective layer (560; 760).

9. The method (300) of any preceding claim, comprising, prior to forming the water barrier layer, cleaning a surface of the first cable assembly to which the coating is to be applied.

10. The method (300) of claim 9, wherein cleaning the surface uses atmospheric plasma cleaning.

11. The method (300) of any preceding claim, wherein the thermal spraying technique (440; 540; 640; 740) comprises one of:
flame spraying;
arc spraying;
plasma spraying;
high velocity oxygen fuel spraying; or
detonation gun spraying.

12. The method (300) of any preceding claim, wherein the metal material comprises one of:
a copper material;
a copper nickel alloy material;
a titanium material; or
a lead material.

13. A joint (450; 550) between a first cable assembly (401; 501) and a second cable assembly (402; 502) obtainable according to the method (300) of any preceding claim.

14. A subsea cable (100; 200) obtainable according to the method (300) of any of claims 1 to 12.
